# EUROPEAN PATENT APPLICATION

(11) **EP 4 250 703 A1**
(43) Date of publication of application: **27.09.2023**
(21) Application number: 22462003.9
(22) Date of filing: 24.03.2022
(51) Int. Cl.: H04N 1/00, H04N 1/04

(54) **DOCUMENT SCANNER BOX**

(71) Applicant: ID&Trust Kft., 1026 Budapest (HU)
(72) Inventor: Szabó, Tamás, H-2083 Solymár (HU)
(74) Representative: Danubia Patent & Law Office LLC

(57) **Abstract**

The document scanner box comprises a substantially flat base plate and a housing (120) attached thereto. A first opening is formed in the backside of the housing (120), which is closed by a transparent plate, wherein the backside of the housing (120) is tilted at an angle of 45° to 80° with respect to the plane of the base plate (110). In front of the first opening, on the backside of the housing (120), a basket is arranged for holding a document of card format. On the front side of the housing (120) opposite the backside, a support member substantially parallel to the plane of said base plate is attached to the housing (120) for holding a mobile phone, the front side of the housing (120) being tilted with respect to the plane of the base plate at an angle of 75° to 85°. On the front side of the housing (120), above the support member (170), a second opening (180) is formed substantially opposite the first opening. A shield plate is arranged on the outside of the basket, substantially parallel to the rear wall of the housing (120).

## Description

The present invention relates to a document scanner box, in particular for documents in card and booklet format.

Several technical solutions are known for reading the so-called machine-readable zone (MRZ) on the surface of official documents, in particular card and booklet documents.

When scanning documents, the following problems dependent on the physical environment should be addressed:
- localization of the card body, i.e. determining the borderline of the document;
- localization of MRZ within the document;
- filtering out the distorting effects of light conditions, such as the environment that is too bright or too dark, the glare or the reflection from the surface of a document due to the illumination; and
- user errors (such as covering some of the data content).

The above factors significantly affect both the success and the quality of document scanning.

There are basically two types of scanning methods, one using a special dedicated hardware device, and the other using a smartphone and a software application installed on it.

The mobile phone applications include, among others, the "easyIDscanner" application of Hotelsystem Kft. (https://easyidscanner.com/), the "Doqu ID Scanner" application developed by 7Hills IT Kft. (https://doqu.hu/), the Iris Development AB "Passport Reader" application (https://passportreader.app/) or the "Scan-ID" application of Anyline Ltd. (https://anyline.com/products/scan-id).

The above solutions are optimized for different applications and solve document scanning in different qualities and with different but generally low user comfort, as these applications are equally affected by the physical and technical limitations of using a mobile phone.

The stand-alone document scanners include, for example, the Gemalto Document Reader family of Thales Inc. (https://www.thalesgroup.com/en/markets/digital-identity-and-security/government/document-readers ) or the passport and ID card scanner Passport "Osmond" or "Combo" of Adaptive Recognition (https://adaptiverecognition.com/product-categories/passport-readers-and-id-scanners/#filter=) .

The advantage of special purpose, dedicated hardware devices is that they are capable of handling problems that depend on different physical parameters when scanning a document. Hardware-based document scanners have an extremely high price level compared to mobile application-based document scanner solutions and require significant technical support (e.g. installation, operation), however, they are able to scan in good quality and quickly.

It is an object of the present invention to provide an auxiliary device that makes mobile document scanning quick and convenient for the user, while at the same time, scanning quality is close to or can even achieve the scanning accuracy and quality provided by special stand-alone document scanners.

The above objects are achieved by providing a document scanner box having a substantially flat base plate and a housing attached thereto, wherein a first opening is formed in the backside of the housing, which is closed by a transparent plate, and wherein the backside of the housing is tilted at an angle of 45° to 80° with respect to the plane of the base plate. In front of the first opening, on the backside of the housing, a basket is arranged for holding a document of card format. On the front side of the housing opposite the backside, a support member substantially parallel to the plane of said base plate is attached to the housing for holding a mobile phone, the front side of the housing being tilted with respect to the plane of the base plate at an angle of 75° to 85°. On the front side of the housing, above the support member, a second opening is formed substantially opposite the first opening. A shield plate is arranged on the outside of the basket, substantially parallel to the rear wall of the housing.

The invention will now be described in more detail with reference to the accompanying drawings. In the drawings:
Figure 1 is an exploded rear view of a preferred embodiment of a document scanner box according to the invention;
Figure 2 is a front perspective view of the embodiment of the document scanner box according to the invention shown in Fig. 1;
Figure 3 is a perspective view of the embodiment of the document scanner box according to the invention shown in Figure 1 in use when scanning a document of book format; and
Figure 4 is a perspective view of the embodiment of the document scanner box according to the invention shown in Figure 1 in use when scanning a document of card format.

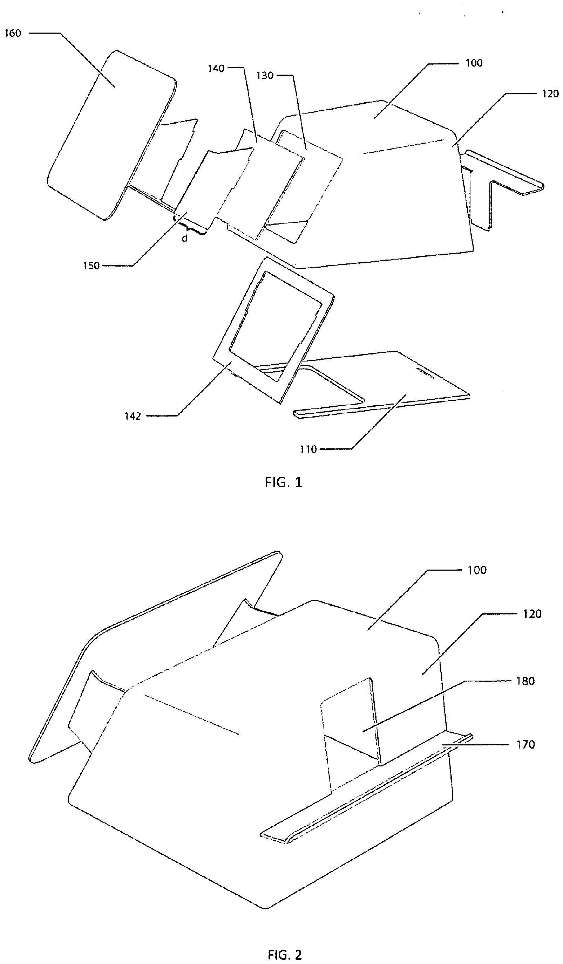

As shown in Figure 1, the document scanner box 100 of the present invention has a substantially flat base plate 110 and a housing 120 mounted on the base plate 110, which are preferably made of metal or hard plastic. The base plate 110 and the housing 120 define a substantially enclosed space.

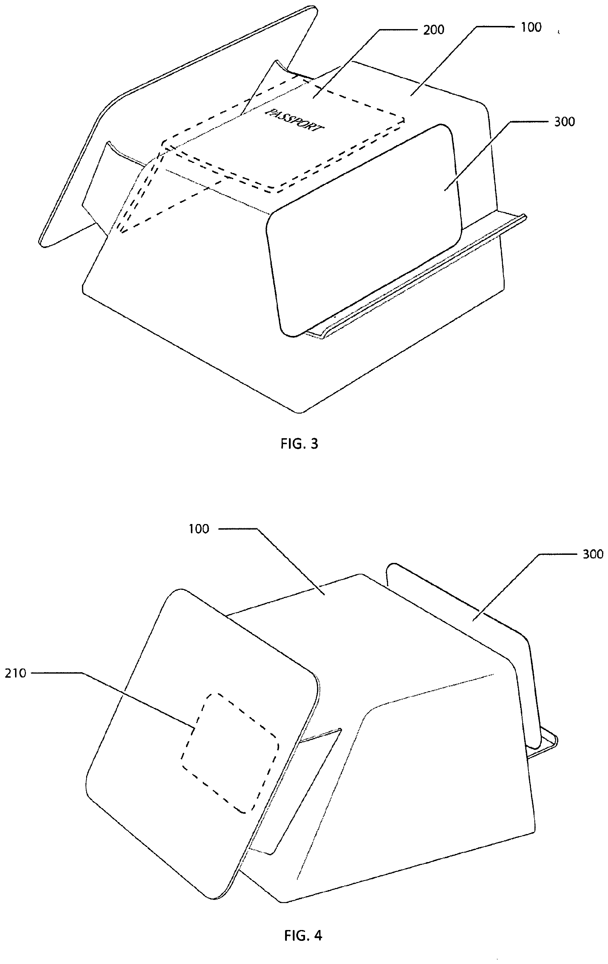

On the backside of the housing 120, a first opening 130 is provided for the document to be scanned. The opening 130 is closed from the inside by a transparent plate 140, such as a glass plate or a plexiglass plate, thereby forming a reading window. The transparent plate 140 is clamped to the inside of the housing 120 by a frame 142. A basket 150 is attached to the outer side of the housing 120 in front of the opening 130 for insertion of documents of the card type. On the outside of the basket 150, there is a shield plate 160 which either forms the rear wall of the basket 150 itself, as shown in Figures 1 and 3, or it may be attached to the rear wall of the basket 150. Preferably, the shield plate 160 extends upwardly beyond the first aperture 130 to prevent direct light from entering the aperture 130 from above into the housing 120 and from causing unfavourable light conditions within the housing 120 when scanning a document.

The rear wall of the housing 120 is tilted so that a card having put into the basket 150 rests firmly on the transparent plate 140 arranged in the first opening 130. The angle of inclination of the rear wall relative to the plane of the base plate 110 is at least 45° and at most 80°, but preferably approx. 60°.

The thickness d of the interior of the basket 150 (i.e. the width of the interior of the basket 150 measured perpendicularly to the rear wall of the housing 120) is at least 2 cm so that the inserted card can be conveniently removed by the user with his/her fingers.

As shown in Figure 2, on the front side of the housing 120, a support member 170 for mobile phones, is attached to the housing 120 in substantially parallel to the plane of the base plate 110. The plane of the support member 170 may also be tilted slightly towards the housing 120, the angle of tilt preferably being at most approx. 10°. Above the support member 170, a second opening 180 is formed on the front side of the housing 120 substantially opposite to the first opening 130 on the backside. The second opening 180, unlike the first opening 130, is not closed by a transparent plate so that the camera of a mobile phone used for scanning does not focus on the transparent plate, and also so that, when using the flash, the light from the flash does not reflect from the transparent plate to the camera of the mobile phone. The relative positions of the support member 170 and the second opening 180 are determined to allow scanning for most currently widely used mobile phones.

The front side of the housing 120 is also slightly inclined, approx. at 75-85° so that a mobile phone placed on the support member 170 leans stably against the front side of the housing 120.

Figure 3 shows the document scanner box 100 of the present invention in use when scanning a document 200 of "booklet" format. The user should press the document 200 against the housing 120 in its open state so that the page of the document 200 to be scanned or at least the MRZ area on that page be visible through the opening 130 to the mobile phone 300 located on the front side of the housing 120. Upon scanning, the document 200 is scanned using the flash and the camera of the mobile phone 300, and then the image of the scanned page or zone is processed by the mobile phone 300 using a dedicated software application, and the extracted information is transmitted through a wireless communication interface of the mobile phone 300 (e.g. WiFi or GSM network) to a respective central computer for further processing, for example to identify the holder of the document 200 or to authenticate the data shown on the document 200.

Figure 4 shows the document scanner box 100 of the present invention in use when scanning a document 210 of card format, such as an ID card or driver's license. The document 210 is inserted into the basket 150 by the user so that the side of the document 210 to be scanned or at least the MRZ area on that side be visible through the opening 130 to the mobile phone 300 located on the front side of the housing 120. Upon scanning, the document 210 is scanned using the flash and the camera of the mobile phone 300, and then the image of the scanned page or area is processed by the mobile phone 300 using a dedicated software application and the extracted information is transmitted through a wireless communication interface of the mobile phone 300 (e.g. WiFi or GSM network) to a respective central computer for further processing, for example to identify the holder of the document 210 or to authenticate the data on the document 210.

To use the cameras of different mobile phones properly, it is advisable to calibrate the scanner application of the mobile phone to the document scanner box. To this end, it is advisable to run a calibration application on the mobile phone. The technique and procedure of calibration will be apparent to those skilled in the art given the geometric characteristics of the document scanner box and the optical parameters of the mobile phone's scanning camera, so the details of the calibration are omitted herein.

In one embodiment of the document scanner box, according to the invention, an NFC antenna is built into the rear wall of the box or an NFC antenna is arranged on the outside of the rear wall, thus allowing NFC-based document data to be read from a secure storage element on the document without the need of placing the document on the NFC reader of a mobile phone.

In another embodiment of the document scanner box according to the invention, an energy source may be built into the housing, which can be used together with the construction of an external USB connector to provide power to the mobile device used to scan documents.

In a further embodiment of the document scanner box according to the invention, an externally switchable light source may be mounted inside the housing, thus avoiding the use of the flash of the mobile phone. This feature is advantageous because the continuous use of the mobile phone's flash will shorten the battery life of the mobile phone and increase the charging frequency, as well as it may cause the battery to overheat, which will also reduce the usability of the mobile phone.

In yet a further embodiment of the document scanner box according to the invention, the reading of additional data carried by the card can also be optimized by using document templates integrated in the mobile phone's application used for document scanning.

The use of the document scanner box according to the invention has the following advantages.

The document scanner box allows reading the MRZ area and other personal data on the document without the need for special dedicated hardware tools, using pre-defined commercially available mobile phones (of many different types).

Although at scanning, an image is recorded of the side of the document to be scanned at a given angle, conversion of the image information containing text into text information (OCR) can be easily optimized, so a "skewed" image of the document can be "set up", and this process can be well algorithmized.

The tilt angle of the backside of the document scanner box (which is preferably about 60°) can be "taught" to the document reader application during the product development. The tilt angle can be changed freely later. The tilt angle is set so that the inserted document can be conveniently inserted and removed using a free hand.

The use of a document reader also eliminates other scanning errors caused by "hand-tremor" when scanning manually.

When using the document scanner box, the document can be easily inserted into and removed from the box, and there is a sufficiently wide support member for the mobile phone to keep it stable.

Due to the closed housing and the optimally selected position of the mobile phone used to scan the document, the localization of the card to be scanned and the determination of the borderline of the card can be performed in better quality than before, thus creating a sufficiently contrasting background on the scanned image.

By placing the document on a specific inclined surface and the predetermined distance between the document and the mobile phone used to scan the document, the position of the borderline of the card and the MRZ area, as well as other data on the card, can be well algorithmized.

By using the flash of the mobile phone, a predictable light condition is created in the enclosed space inside the housing of the document scanner box, thus eliminating glare on the card surface and optimizing the document scanning algorithm.

Due to the physical design of the document scanner box, when a flash is used, the flash does not focus on the surface of the document, so glare on the surface of the card does not affect the quality of document scanning. At the same time, the diffused light generated in the interior of the housing provides ideal illumination conditions.

By using the document scanner box, the user can avoid covering the relevant area during scanning by holding the document in hand.

## Claims

1. A document scanner box having a substantially flat base plate (110) and a housing (120) attached thereto,
**characterized in that**
- a first opening (130) is formed in the backside of the housing (120), which is closed by a transparent plate (140), wherein the backside of the housing (120) is tilted at an angle of 45° to 80° with respect to the plane of the base plate (110);
- in front of the first opening (130), on the backside of the housing (120), a basket (150) is arranged for holding a document of card format;
- on the front side of the housing (120) opposite the backside, a support member (170) substantially parallel to the plane of said base plate (110) is attached to the housing (120) for holding a mobile phone, the front side of the housing (120) being tilted with respect to the plane of the base plate (110) at an angle of 75° to 85°;
- on the front side of the housing (120), above the support member (170), a second opening (180) is formed substantially opposite the first opening (130); and
- a shield plate (160) is arranged on the outside of the basket (150), substantially parallel to the rear wall of the housing (120).

2. The document scanner box of claim 1, **characterized in that** the transparent plate (140) is made of glass or plexiglass.

3. The document scanner box of claim 1 or 2, **characterized in that** the angle of inclination of the rear wall is approx. 60°.

4. The document scanner box of any one of claims 1 to 4, **characterized in that** an externally switchable light source is provided in the interior of the housing (120).
